Europäisches Patentamt

European Patent Office

Office européen des brevets

(11) Veröffentlichungsnummer: **0 095 704**
**A2**

## (12) EUROPÄISCHE PATENTANMELDUNG

(21) Anmeldenummer: 83105121.4

(22) Anmeldetag: 24.05.83

(51) Int. Cl.³: **F 25 B 13/00, B 60 H 3/00**

(30) Priorität: **27.05.82 DE 3219950**

(43) Veröffentlichungstag der Anmeldung: **07.12.83**
**Patentblatt 83/49**

(84) Benannte Vertragsstaaten: **DE FR GB IT SE**

(71) Anmelder: **BAYERISCHE MOTOREN WERKE**
**Aktiengesellschaft, Postfach 40 02 40 Petuelring 130,**
**D-8000 München 40 (DE)**

(72) Erfinder: **Bednarek, Henryk, Dipl.-Ing.,**
**Max-Friesenegger Strasse 3, D-8910 Landsberg (DE)**

(74) Vertreter: **Bullwein, Fritz, Bayerische Motoren Werke**
**Aktiengesellschaft**
**Postfach 40 02 40 Petuelring 130 AJ-33,**
**D-8000 München 40 (DE)**

(54) Klimaanlage für Kraftfahrzeuge, insbesondere für Personenkraftwagen.

㊲ Eine Klimaanlage für Kraftfahrzeuge, insbesondere für Personenkraftwagen, die neben dem eigentlichen Klimabetrieb auch einen (Zusatz-) Heizbetrieb durch Beaufschlagen des Verdampfers mit komprimiertem, heißem Kältemittelgas ermöglicht, ist zur Durchführung eines weiteren, energiesparenden Heizbetriebs geeignet, wenn der Verdampfer ein Kältemittel-/Kühlwasser-Wärmetauscher ist und die Behandlung der in den Fahrzeuginnenraum einströmenden Luft in einem üblichen Luft-/Kühlwasser-Wärmetauscher erfolgt. Dieser ist im Klima- und (Zusatz-) Heizbetrieb mit dem Kältemittel-/Kühlwasser-Wärmetauscher in einen vom eigentlichen Kühlwasserkreislauf isolierten separaten Kühlwasserkreislauf eingeschaltet und bei ausreichender Temperatur des Kühlwassers im eigentlichen Kühlwasserkreislauf an diesem Kreislauf angeschlossen. Dabei ist dann der Kältemittel-/Kühlwasser-Wärmetauscher ausgeschaltet.

Klimaanlage für Kraftfahrzeuge, insbesondere für Personenkraftwagen

Die Erfindung bezieht sich auf eine Klimaanlage, insbesondere für Personenkraftwagen, mit einem Wärmetauscher, der
im Klimabetrieb als Verdampfer für ein Kältemittel dient
und dem im Heizbetrieb das Kältemittel gasförmig und unter
einem Druck von 15 bis 25 bar zuführbar ist.

Durch die in der eigenen früheren Patentanmeldung P 30 47
955.1-21 beschriebene Erfindung ergibt sich eine insbesondere bei kalter Witterung und kaltem Motor besonders
leistungsfähige Zusatzheizung mit Hilfe der Teile, die
ansonsten als eigentliche Klimaanlage benutzt werden. Ziel
der vorliegenden Erfindung ist es, die Einsatzmöglichkeiten der früheren Erfindung zu erweitern und die Wirksamkeit der Zusatzheizung zu verbessern. Ferner soll die
Austauschbarkeit einer installierten konventionellen
reinen Heizanlage (mit einem üblicherweise vorhandenen
Kühlwasser-/ Luft-Wärmetauscher) durch die in der genannten Patentanmeldung beschriebene Klimaanlage unter Aufrechterhaltung der Möglichkeit einer Zusatzheizung bzw.
das umgekehrte Ersetzen einer Klimaanlage durch eine reine
Heizanlage erleichtert werden.

Die vorliegende Erfindung ist zum Erreichen dieser Ziele
dadurch gekennzeichnet, daß das Kältemittel im Wärmetauscher mit dem Kühlwasser der Brennkraftmaschine in Temperaturverbindung steht und daß das Kühlwasser einen - an sich bekannten - Luft-/Kühlwasser-Wärmetauscher durchströmt, über den die in den Fahrgastraum gelangende Luft geführt ist

Grundgedanke der vorliegenden Erfindung ist, die dem Fahrzeuginnenraum zuzuführende Luft nicht direkt dem Kältemittel auszusetzen, sondern die Temperaturbehandlung dieser Luft indirekt durch Zwischenschaltung von Kühlwasser der Brennkraftmaschine vorzunehmen. Dadurch wird es möglich, bei der Klimaanlage den in einer Heizanlage vorhandenen Luft-/Kühlwasser-Wärmetauscher zu verwenden. Der Wechsel von einer vorhandenen Heizanlage zu einer Klimaanlage erfordert im wesentlichen lediglich das Hinzufügen des Kältemittel-/Kühlwasser-Wärmetauschers und umgekehrt. Dadurch lassen sich auch die Abmessungen und der Gestaltungsaufwand der Anlage gering halten, da lediglich ein Wärmetauscher (für Luft/Kühlwasser) im Luftstrom angeordnet werden muß. Auch sind die Luft-Strömungsverluste der Klimaanlage gering, da stets nur dieser Wärmetauscher durchströmt wird.

Dieser Grundgedanke kann auf verschiedene Weise realisiert werden. So ist es möglich, stets einen gewissen Teilstrom aus dem eigentlichen Kühlwasserkreislauf abzuzweigen und über den Luft-/Kühlwasser-Wärmetauscher zu führen. Soll, um den Klimabetrieb durchzuführen, das über diesen Wärmetauscher geführte Kühlwasser temperaturmäßig abgesenkt werden, so kann dieser Kühlwasserstrom vor dem Wärmetauscher durch den Kältemittel-/Kühlwasser-Wärmetauscher geführt werden, wobei dann in dem letztgenannten Wärmetauscher ein Verdampfen des Kühlmittels und damit eine Temperaturabsenkung des Kühlwassers vorgenommen wird. Gegenüber einer derartigen Klimaanlage läßt sich eine bedeutende Verbesserung erzielen, wenn der die beiden Wärmetauscher durchströmende Teil des Kühlwassers der Brennkraftmaschine im Klimabetrieb einen vom eigentlichen Kühlwasser-Kreislauf abgetrennten Kreislauf bildet. Die Verbesserung liegt insbesondere auf steuerungstechnischem Gebiet.

Die Steuerung selbst kann in vorteilhafter Weise mit Hilfe eines Bypaß erfolgen, der zu dem Kältemittel-/Kühlwasser-Wärmetauscher parallel ist. Das durch diesen Wärmetauscher strömende Kühlwasser und das hierzu relativ wärmere Kühlwasser im Bypaß kann nun in gewünschter Weise gemischt dem Luft-/Kühlwasser-Wärmetauscher zugeführt werden und zum Einstellen einer gewünschten Temperatur der aus diesem Wärmetauscher austretenden Luft dienen. Hierdurch wird gewährleistet, daß mit Hilfe des durch den Kältemittel-/Kühlwasser-Wärmetauscher führenden Kühlwassers beim Kälte-Teillastbetrieb eine gewisse Kältespeicherung möglich wird und die Wärmeübergänge am Luft-/Kühlwasser-Wärmetauscher möglichst hoch bleiben.

Die Steuerung des Bypaß selbst kann auf verschiedene Weise vorgenommen werden. Beispielsweise eignet sich hierzu ein Taktventil im Bypaß oder aber auch ein Dreiwegeventil an der Abzweigstelle des Bypaß.

Eine Verbesserung der Funktion der Klimaanlage kann ferner durch eine Zusatzpumpe im Kreislauf des Kühlwassers durch die beiden Wärmetauscher erreicht werden. Durch geeignete Anbindung dieses Kreislaufs an den eigentlichen Kühlwasser-Kreislauf der Brennkraftmaschine und Positionierung der Zusatzpumpe kann diese auch im Heizbetrieb, wenn das Kühlwasser eine genügend hohe Temperatur besitzt, die Wirkung der in der Regel stets vorhandenen Kühlwasserpumpe unterstützen und für die ausreichende Durchströmung des Luft-/Kühlwasser- Wärmetauschers sorgen. Um einen gleichmäßigen Kühlwasserstrom durch diesen Wärmetauscher zu gewährleisten, bietet es sich an, die Drehzahl der Zusatzpumpe komplementär zur Drehzahl der Brennkraftmaschine und damit der Kühlwasserpumpe einzustellen. Diese Steuerung kann entsprechend den Temperaturerfordernissen des Fahrgastraums modifiziert werden.

Mit Hilfe der beiden Wärmetauscher ist neben dem Klimabetrieb auch ein Heizbetrieb auf zwei verschiedene Arten möglich. Eine dieser Arten besteht darin, daß beide Wärmetauscher in einen vom eigentlichen Kühlwasserkreislauf isolierten Kreislauf des Kühlwassers eingeschaltet sind. Diese Betriebsart ist jedoch infolge des dafür erforderlichen zusätzlichen Energieaufwands für den Betrieb des Kompressors zum Erwärmen und Komprimieren des Kältemittels nur solange notwendig und sinnvoll, bis das Kühlwasser für die Brennkraftmaschine eine ausreichend hohe Temperatur besitzt. Ist dies der Fall, so kann durch Ankopplung des Luft-/Kühlwasser-Wärmetauschers an den eigentlichen Kühlwasserkreislauf und Ausschalten des Kältemittel-/Kühlwasser-Wärmetauscher der erstgenannte Wärmetauscher mit ausreichend erwärmtem Kühlwasser versorgt werden. Als Kriterium für das Einschalten des Luft-/Kühlwasser-Wärmetauschers in den eigentlichen Kühlwasserkreislauf kann die Kühlwassertemperatur selbst dienen. Hierfür kann ein in der Regel ohnehin vorhandener Geber benutzt werden. Auf diese Weise ist gewährleistet, daß der Luft-/Kühlwasser-Wärmetauscher stets mit ausreichend erwärmtem Kühlwasser durchströmt wird. Gleichzeitig wird der Energieaufwand für den Heizbetrieb möglichst gering gehalten.

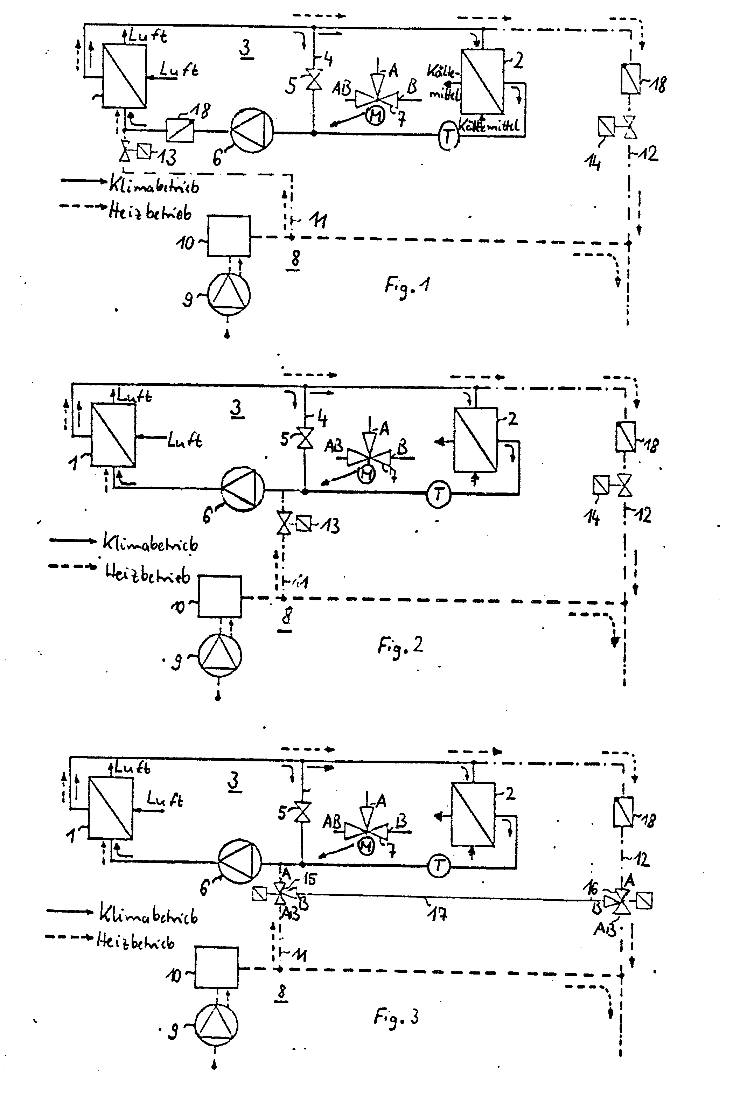

In der Zeichnung sind Ausführungsbeispiele der Erfindung dargestellt. Dabei zeigen die Fig. 1 bis 3 jeweils Klimaanlagen mit zwei Wärmetauschern, durch die Klimabetrieb und ein wirksamer und dennoch energiesparender Heizbetrieb ermöglicht wird.

Jede der in den Fig. 1 bis 3 dargestellten Klimaanlagen enthält zwei Wärmetauscher 1 und 2 für Luft/Kühlwasser (1) bzw. Kältemittel/Kühlwasser (2), die in einem von Kühlwasser einer nicht im einzelnen dargestellten Brennkraftmaschine gebildeten Kreislauf 3 hintereinander geschaltet sind. Zu diesem Kreislauf 3 gehört ferner ein Bypaß 4 für den Wärmetauscher 2 mit einem Taktventil 5 sowie eine Zusatzpumpe 6. Alternativ zum Taktventil 5 kann am Abzweig des Bypaß 4 ein Dreiwegeventil 7 vorgesehen sein.

Mit Hilfe des in Fig. 1 mit ununterbrochenen Linien eingezeichneten Kreislaufs 3 ist ein Klimabetrieb und ein Heizbetrieb möglich. Dabei wird der Heizbetrieb solange durchgeführt, bis das Kühlwasser im eigentlichen Kühlwasserkreislauf 8 der Brennkraftmaschine eine hinreichend große
Temperatur besitzt. Dieser Kreislauf 8 ist ausschnittsweise
und strichliert dargestellt. Er enthält eine Kühlwasserpumpe 9 sowie einen angedeuteten Motorblock 10 der Brennkraftmaschine.

Beim Klimabetrieb wird der Wärmetauscher 2 in an sich bekannter Weise als Verdampfer für das zugeführte Kältemittel
verwendet. Der Aufbau dieses Verdampfers ist beispielsweise
in Form eines Rohrbündelverdampfers vorgenommen. Dieser
Verdampfer kann sehr kompakt aufgebaut werden, wenn innen
gerippte Rohre verwendet werden. Erste Berechnungen haben
ergeben, daß k-Faktoren von k = 974 (W/$m^2$k) bis k = 1744
(W/$m^2$k) realisierbar sind, was bedeutet, daß ein Wärmetauscher bei einer Kälteleistung von 4,6 KW und einen mittleren logarithmischen Temperaturgefälle von $\Delta T_m$ =
$10 [k]$ mit relativ geringen Außenabmessungen darstellbar
ist.

Das im Wärmetauscher 2 abgekühlte Kühlwasser wird von der
bespielsweise elektrisch angetriebenen Zusatzpumpe 6 angesaugt und durch den Wärmetauscher 1 gedrückt. Das Taktventil 5 bzw. das beispielsweise elektromotorisch angetriebene Dreiwegeventil 7 wird von einem nicht dargestellten
Regler so angesteuert, daß durch Mischung des relativ wärmeren Kühlwassers im Bypaß 4 mit dem kälteren Kühlwasser am
Ausgang des Wärmetauschers 2 das dem Wärmetauscher 1 zufließende Kühlwasser entsprechend der momentanen Erfordernis (Abweichung zwischen Soll und Ist) temperiert wird.
Durch die Kältespeicherung in dem den Wärmetauscher 2
enthaltenen Teil des Kreislaufs 3 - der in der Regel stets
vorhandene Frostschutz ermöglicht durch Steuern eines
üblicherweise vorhandenen Kältemittel-Kompressors, z.B.
mittels eines Temperaturschalters T ein Abkühlen des Kühlwassers im Wärmetauscher 2 auf z.B. -20° C - werden bei Kälte-Teillastbetrieb Temperaturspitzen des Kühlwassers im Wärmetauscher 1 vermieden, so daß der üblicherweise bei einer Klimaanlage notwendige Vereisungsschutz entfallen kann. Dennoch können die Wärmeübergänge am Wärmetauscher 1 möglichst hoch bleiben.

In diesem Teil des Kreislaufs 3, der den Wärmetauscher 2 enthält, kann der Kompressor für das Kältemittel ausgeschaltet werden, wenn das Kühlwasser eine vorgegebene niedrige Temperatur unterschreitet. Bei Überschreiten dieser Temperatur kann der Kompressor wieder zugeschaltet werden.

Mit Hilfe des Kreislaufs 3 ist, wie bereits erwähnt, auch ein Heizbetrieb möglich. Hierbei wird dem Wärmetauscher 2 Kältemittel zugeführt, das durch den Kompressor auf einen Druck von 15 bis 25 bar komprimiert und erhitzt ist. Im Wärmetauscher 2 erfolgt nun eine Erwärmung des durchströmen den Kühlwassers, das durch die Zusatzpumpe 6 zum Wärmetauscher 1 gefördert und von diesem zum Wärmetauscher 2 zurückgefördert wird. Die dem Fahrgastraum zugeführte Luft wird im Wärmetauscher 1 erwärmt. Bei diesem Heizbetrieb ist der Bypaß 4 durch das dann geschlossene Taktventil 5 bzw. das auf Durchgang AB-B geschaltete Dreiwegeventil 7 unwirksam geschaltet.

Neben dem Heizbetrieb bei Isolation des Kreislaufs 3 vom eigentlichen Kühlwasser-Kreislauf 8 kann bei ausreichend hoher Temperatur des Kühlwassers in diesem Kreislauf 8 auch ein weiterer Heizbetrieb durchgeführt werden. Hierbei sind in den strichpunktiert eingezeichneten Verbindungsleitungen 11 und 12 der Kreisläufe 3 und 8 angeordnete Ventile 13 und 14 wirksam. Dabei ist das Ventil 13 wiederum ein Taktventil, das entsprechend dem Kühlwasserbedarf des Wärmetauschers 1 hinsichtlich Temperatur und Menge des zugeführten Kühlwassers geschaltet ist und das Ventil 14 dann stets geöffnet. Die Zusatzpumpe 6 ist ausgeschaltet, wodurch dann auch der Wärmetauscher 2 nicht mehr von Kühlwasser durchströmt wird und daher unwirksam ist. Der Kompressor für das Kältemittel ist ebenfalls ausgeschaltet. Bei diesem Heizbetrieb erfolgt die Erwärmung der dem Fahrgastraum zugeführten Luft im Wärmetauscher 1 direkt durch das von der Brennkraftmaschine durch die Kühlwasserpumpe 9 abgeführte Kühlwasser. Die Durchströmung des Wärmetauschers 1 mit diesem Kühlwasser wird hierbei ebenfalls durch die Kühlwasserpumpe 9 durchgeführt.

Bei der Klimaanlage nach Fig. 2, die in ihrem grundsätzlichen Aufbau der vorher beschriebenen Klimaanlage entspricht, ist die Zusatzpumpe 6 auch dann eingeschaltet, wenn der Wärmetauscher 1 von Kühlwasser durchströmt werden soll, das aus dem Kreislauf 8 der Brennkraftmaschine abgezweigt wird. Diese Klimaanlage ermöglicht die Aufrechterhaltung eines ausreichenden Heizbetriebs bei hinreichend erwärmtem Kühlwasser im Kreislauf 8 beispielsweise auch dann, wenn die Kühlwasserpumpe 9 im Motorleerlauf einen genügend großen Kühlwasserdurchsatz durch den Wärmetauscher 1 nicht gewährleistet. Bei diesem Heizbetrieb durch das Kühlwasser im Kreislauf 8 erfolgt die Steuerung des Kühlwasserdurchsatzes durch den Wärmetauscher 1 ebenfalls mit Hilfe des Taktventils 13, das entsprechend den Erfordernissen gesteuert wird. Die Drehzahl der Zusatzpumpe 6 ist unabhängig von der Brennkraftmaschine stets konstant. Auch bei dieser Klimaanlage ist der Kreislauf 3 im Heizbetrieb nur solange vom Kreislauf 8 isoliert und der Wärmetauscher 2 wirksam, bis das Kühlwasser im Kreislauf 8 eine hinreichend hohe Temperatur besitzt.

Dasselbe gilt für die Klimaanlage nach Fig. 3, die in ihrem grundsätzlichen Aufbau der Klimaanlage nach Fig. 2 stark ähnelt und beispielsweise ebenfalls die Verwendung der Zusatzpumpe 6 für die Versorgung des Wärmetauschers 1 mit Kühlwasser aus dem Kreislauf 8 vorsieht. Der Unterschied zu Fig. 2 besteht lediglich darin, daß die Regelung des dem Wärmetauscher 1 zufließenden Kühlwassers nicht durch ein Taktventil 13, sondern durch Drehzahlsteuerung der Zusatzpumpe 6 durchgeführt wird. Diese Steuerung kann im einfachsten Fall komplementär zur Drehzahl der Brennkraftmaschine erfolgen. Bei niedriger Drehzahl der Brennkraftmaschine, beispielsweise im Motorleerlauf, sorgt im wesentlichen die Zusatzpumpe 6 für einen ausreichenden Kühlwasserdurchsatz durch den Wärmetauscher 1. Dies hat den großen Vorteil, daß die Drosselverluste des Taktventils entfallen. Zum Anbinden bzw. Abtrennen der Kreisläufe 3 und 8 an- bzw. voneinander dienen dabei zwei Dreiwegeventile 15 und 16, die einen Bypaß 17 für den Kreislauf 3 steuern. Während des Klimabetriebs und des Heizbetriebs im Kreislauf 3 - in beiden Fällen ist der Wärmetauscher 2 eingeschaltet - ist der Bypaß 17 eingeschaltet. Die Dreiwegeventile 15 und 16 stehen in der Stellung AB-B. Im Heizbetrieb mit Hilfe des Kühlwassers im Kreislauf 8 hingegen sind die Dreiwegeventile 15 und 16 in Stellung AB-A eingestellt. Die beiden Ventile 15 und 16 werden von einer einzigen Stellvorrichtung betätigt. Dabei kann es sich um eine Unterdruck-Servoeinrichtung oder eine Magnetspule handeln.

Um den Klima- und die beiden Heizbetriebe störungsfrei durchzuführen, sind die in den Fig. 1 bis 3 dargestellten Klimaanlagen an geeigneten Stellen mit Rückschlagventilen 18, -klappen oder dgl. versehen.

Patentansprüche:

1. Klimaanlage für Kraftfahrzeuge, insbesondere für Personenkraftwagen, mit einem Wärmetauscher, der im Klimabetrieb als Verdampfer für ein Kältemittel dient und dem im Heizbetrieb das Kältemittel gasförmig und unter einem Druck von 15 bis 25 bar zuführbar ist, dadurch gekennzeichnet , daß das Kältemittel im Wärmetauscher (2) mit dem Kühlwasser der Brennkraftmaschine in Temperaturverbindung steht und daß das Kühlwasser einen - an sich bekannten - Luft-/Kühlwasser-Wärmetauscher (1) durchströmt, über den die in den Fahrgastraum gelangende Luft geführt ist.

2. Klimaanlage nach Anspruch 1, dadurch gekennzeichnet, daß der die beiden Wärmetauscher (1 u. 2) durchströmende Teil des Kühlwassers der Brennkraftmaschine im Klimabetrieb einen vom eigentlichen Kühlwasser-Kreislauf (8) abgetrennten Kreislauf (3) bildet.

3. Klimaanlage nach Anspruch 2, dadurch gekennzeichnet, daß der Kreislauf (3) des Kühlwassers durch die beiden Wärmetauscher (1 u. 2) eine Zusatzpumpe (6) enthält.

4. Klimaanlage nach Anspruch 2 oder 3, dadurch gekennzeichnet, daß der Kreislauf (3) des Kühlwassers durch

0095704

die beiden Wärmetauscher (1 u. 2) einem Bypaß (4) für den Kältemittel-/ Kühlwasser-Wärmetauscher (2) enthält.

5. Klimaanlage nach Anspruch 4, dadurch gekennzeichnet, daß der Bypaß durch ein Taktventil (5) gesteuert ist.

6. Klimaanlage nach Anspruch 4, dadurch gekennzeichnet, daß der Bypaß durch ein Dreiwegeventil (7) gesteuert ist.

7. Klimaanlage nach einem der Ansprüche 2 bis 6, dadurch gekennzeichnet, daß der Kreislauf (3) des Kühlwassers durch die beiden Wärmetauscher (1 und 2) im Heizbetrieb bis zu einer vorgegebenen Temperatur des Kühlwassers vom eigentlichen Kühlwasser-Kreislauf isoliert bleibt.

8. Klimaanlage nach Anspruch 7, dadurch gekennzeichnet, daß oberhalb der vorgegebenen Temperatur des Kühlwassers im eigentlichen Kühlwasser-Kreislauf (8) der Luft-/Kühlwasser-Wärmetauscher (1) in den Kühlwasser-Kreislauf (8) eingeschaltet und der Kältemittel-/Kühlwasser-Wärmetauscher (2) ausgeschaltet ist.

9. Klimaanlage nach Anspruch 8, dadurch gekennzeichnet, daß die Zusatzpumpe (6) auch im Heizbetrieb Kühlwasser durch den Luft-/Kühlwasser-Wärmetauscher (1) fördert.

10. Klimaanlage nach Anspruch 9, dadurch gekennzeichnet, daß die Drehzahl der Zusatzpumpe (6) komplementär zur Drehzahl der Brennkraftmaschine eingestellt ist.

1/1

0095704

11.7.82

Fig. 1

Fig. 2

Fig. 3